# EUROPEAN PATENT APPLICATION

(11) **EP 4 412 138 A1**
(43) Date of publication of application: **07.08.2024**
(21) Application number: 22880372.2
(22) Date of filing: 13.10.2022
(51) Int. Cl.: H04L 5/00

(54) **DATA TRANSMISSION METHOD AND APPARATUS**

(30) Priority: 14.10.2021 CN 202111197663
(71) Applicant: Huawei Technologies Co., Ltd., Shenzhen, Guangdong 518129 (CN)
(72) Inventor: YOU, Chunhua, Shenzhen, Guangdong 518129 (CN); GUO, Yinghao, Shenzhen, Guangdong 518129 (CN); KOZIOL, Dawid, Shenzhen, Guangdong 518129 (CN); LOU, Chong, Shenzhen, Guangdong 518129 (CN); MAO, Yingchao, Shenzhen, Guangdong 518129 (CN)
(74) Representative: Gill Jennings & Every LLP
(86) International application number: PCT/CN2022/125064
(87) International publication number: WO 2023/061436

(57) **Abstract**

Embodiments of this application disclose a data transmission method and an apparatus. The method includes: When a terminal device is in a radio resource control RRC inactive state, the terminal device selects a first synchronization signal block SSB at first time, and sends first small data transmission SDT data to a network device by using a first configured grant CG resource corresponding to the first SSB; and when signal quality of a plurality of SSBs at second time is greater than a first threshold, the terminal device preferentially selects the first SSB from the plurality of SSBs at the second time, and sends second SDT data to the network device by using a second CG resource corresponding to the first SSB. According to embodiments of this application, an SSB used for previous SDT data transmission is preferentially selected, so that the terminal device does not need to reselect an SSB, thereby improving data transmission efficiency, aligning beams of the network device and the terminal device, and improving a PDCCH transmission success rate.

## Description

This application claims priority to Chinese Patent Application No. 202111197663.3, filed with the China National Intellectual Property Administration on October 14, 2021 and entitled "DATA TRANSMISSION METHOD AND APPARATUS", which is incorporated herein by reference in its entirety.

### TECHNICAL FIELD

This application relates to the field of communication technologies, and in particular, to a data transmission method and an apparatus.

### BACKGROUND

Currently, two main solutions for data transmission in a radio resource control (radio resource control, RRC) inactive (inactive) state are being discussed in a standard: RRC-less (RRC-less) small data transmission (small data transmission, SDT) and RRC-based (RRC-based) SDT.

For the RRC-based SDT, an RRC resume request (RRC resume request) needs to be sent. To enable a network device to learn of a downlink beam of a terminal device, the terminal device preferentially selects an SSB, and sends SDT data to the network device by using the selected SSB. Once the network device receives the SDT data, the network device may determine, based on a correspondence between the SDT data and the SSB, the SSB selected by the terminal device, and send a physical downlink control channel (physical downlink control channel, PDCCH) to the terminal device by using a beam corresponding to the selected SSB. However, how to select an SSB if the SDT data is not completely sent or is sent during subsequent (subsequent) transmission has not been discussed currently. As a result, beams of the network device and the terminal device may not be aligned, and transmission of the PDCCH sent by the network device fails.

### SUMMARY

Embodiments of this application provide a data transmission method and an apparatus, so that a terminal device does not need to reselect an SSB, thereby improving data transmission efficiency, aligning beams of a network device and the terminal device, and improving a PDCCH transmission success rate.

According to a first aspect, an embodiment of this application provides a data transmission method, including: When a terminal device is in a radio resource control RRC inactive state, the terminal device selects a first synchronization signal block SSB at first time, and sends first small data transmission SDT data to a network device by using a first configured grant CG resource corresponding to the first SSB; and when signal quality of a plurality of SSBs at second time is greater than a first threshold, the terminal device preferentially selects the first SSB from the plurality of SSBs at the second time, and sends second SDT data to the network device by using a second CG resource corresponding to the first SSB. An SSB used for previous SDT data transmission is preferentially selected from the plurality of SSBs, so that the terminal device does not need to reselect an SSB, thereby improving data transmission efficiency, aligning beams of the network device and the terminal device, and improving a PDCCH transmission success rate.

In a possible design, when signal quality of the first SSB in the signal quality of the plurality of SSBs at the second time is less than or equal to the first threshold, the terminal device selects a second SSB from the plurality of SSBs at the second time, and sends the second SDT data to the network device by using a CG resource corresponding to the second SSB. The second SSB whose signal quality is greater than the first threshold is selected for transmission of the SDT data, to ensure an SDT data transmission success rate.

In another possible design, that the terminal device preferentially selects the first SSB from the plurality of SSBs at the second time includes: When the terminal device fails to receive acknowledgment ACK indication information of the first SDT data or receives negative acknowledgment NACK indication information of the first SDT data, the terminal device preferentially selects the first SSB from the plurality of SSBs at the second time. When SDT data transmission fails, the SSB used for the previous SDT data transmission is preferentially selected, so that the terminal device does not need to reselect an SSB, thereby improving SDT data transmission efficiency.

In another possible design, when the terminal device receives ACK indication information of the first SDT data, the terminal device selects a third SSB from the plurality of SSBs at the second time, and sends the second SDT data to the network device by using a CG resource corresponding to the third SSB.

In another possible design, the terminal device receives a first message sent by the network device, and the first message indicates to enter the RRC inactive state.

In another possible design, the first message includes duration of a first timer; the terminal device starts the first timer when sending the first SDT data; and in a running period of the first timer, the terminal device preferentially selects the first SSB from the plurality of SSBs at the second time, where the second time is within the running period of the first timer. In the running period of the first timer, the terminal device preferentially selects, from the plurality of SSBs at the second time, the SSB used for the previous SDT data transmission, so that the terminal device does not need to reselect an SSB, thereby improving the SDT data transmission efficiency. In this way, the beams of the network device and the terminal device are aligned, so that the PDCCH transmission success rate is improved.

In another possible design, the first message includes duration of a first timer; the terminal device starts the first timer when sending the first SDT data; and after the first timer expires, the terminal device selects a fourth SSB from the plurality of SSBs at the second time, and sends the second SDT data to the network device by using a CG resource corresponding to the fourth SSB, where the second time is after expiration time of the first timer.

In another possible design, the first message further includes N CG-SDT configurations and N control resource sets and/or N search spaces, one CG-SDT configuration corresponds to one control resource set and/or one search space, and the CG-SDT configuration indicates a CG-SDT resource set, where N is an integer greater than or equal to 1.

In another possible design, the terminal device receives downlink control information from the network device by using a control resource set corresponding to the first SSB and/or a search space corresponding to the first SSB, and the downlink control information indicates an uplink resource or a downlink resource; and the terminal device sends third SDT data to the network device by using the uplink resource, or receives the third SDT data from the network device by using the downlink resource. In a multi-TRP scenario, a correspondence between a CG-SDT configuration and a control resource set and/or a search space is defined. After receiving the first SDT data, the network device can determine a control resource set and/or a search space that are/is used to send downlink control information. The terminal device can determine a control resource set and/or a search space that are/is used to receive the downlink control information, so that the beams of the network device and the terminal device are aligned, to perform transmission of SDT data by using the uplink resource or the downlink resource. When multi-TRP SDT is supported, the SDT data transmission efficiency is improved.

In another possible design, the terminal device sends configured grant CG-uplink control information UCI to the network device by using the second CG resource corresponding to the first SSB, and the CG-UCI indicates a first SSB index. The network device learns of, by using the CG-UCI, an SSB selected by the terminal device, and sends the downlink control information by using the SSB selected by the terminal device, so that the beams of the network device and the terminal device are aligned, thereby improving the PDCCH transmission success rate.

In another possible design, the terminal device sends CG-UCI and a demodulation reference signal DMRS to the network device by using the second CG resource corresponding to the first SSB, where the CG-UCI indicates a part of a first SSB index, and the DMRS indicates the other part of the first SSB index. The SSB index is indicated by using the DMRS and the CG-UCI, so that the network device learns of the SSB selected by the terminal device, and sends the downlink control information by using the SSB selected by the terminal device, so that the beams of the network device and the terminal device are aligned, thereby improving the PDCCH transmission success rate.

In another possible design, the CG-UCI further indicates at least one of a hybrid automatic repeat request identifier HARQ ID, a redundancy version, and a new transmission indication.

According to a second aspect, an embodiment of this application provides a data transmission method, including: receiving, by a network device, first small data transmission SDT data that is sent by a terminal device in a radio resource control RRC inactive state by using a first configured grant CG resource corresponding to a first SSB; and receiving, by the network device, second SDT data that is sent by the terminal device by using a second CG resource corresponding to the first SSB. When signal quality of a plurality of SSBs is greater than a first threshold, an SSB used for previous SDT data transmission is preferentially selected from the plurality of SSBs, so that the terminal device does not need to reselect an SSB, thereby improving data transmission efficiency, aligning beams of the network device and the terminal device, and improving a PDCCH transmission success rate.

In a possible design, the network device sends a first message to the terminal device, and the first message indicates to enter the RRC inactive state.

In another possible design, the first message includes duration of a first timer, and the duration of the first timer indicates time for selecting the first SSB. In a running period of the first timer, the terminal device preferentially selects, from the plurality of SSBs at the second time, the SSB used for the previous SDT data transmission, so that the terminal device does not need to reselect an SSB, thereby improving the data transmission efficiency. In this way, the beams of the network device and the terminal device are aligned, so that the PDCCH transmission success rate is improved.

In another possible design, the first message further includes N CG-SDT configurations and N control resource sets and/or N search spaces, one CG-SDT configuration corresponds to one control resource set and/or one search space, and the CG-SDT configuration indicates a CG-SDT resource set, where N is an integer greater than or equal to 1.

In another possible design, the network device sends downlink control information to the terminal device by using a control resource set corresponding to the first SSB and/or a search space corresponding to the first SSB, and the downlink control information indicates an uplink resource or a downlink resource; and the network device receives, on the uplink resource, third SDT data sent by the terminal device, or sends the third SDT data to the terminal device on the downlink resource. In a multi-TRP scenario, a correspondence between a CG-SDT configuration and a control resource set and/or a search space is defined. After receiving the first SDT data, the network device can determine a control resource set and/or a search space that are/is used to send downlink control information. The terminal device can determine a control resource set and/or a search space that are/is used to receive the downlink control information, so that the beams of the network device and the terminal device are aligned, to perform transmission of SDT data by using the uplink resource or the downlink resource. When multi-TRP SDT is supported, SDT data transmission efficiency is improved.

In another possible design, the network device receives CG-UCI that is sent by the terminal device by using the second CG resource corresponding to the first SSB, and the CG-UCI indicates a first SSB index. The network device learns of, by using the CG-UCI, an SSB selected by the terminal device, and sends the downlink control information by using the SSB selected by the terminal device, so that the beams of the network device and the terminal device are aligned, thereby improving the PDCCH transmission success rate.

In another possible design, the network device receives CG-UCI and a DMRS that are sent by the terminal device by using the second CG resource corresponding to the first SSB, the CG-UCI indicates a part of a first SSB index, and the DMRS indicates the other part of the first SSB index. The SSB index is indicated by using the DMRS and the CG-UCI, so that the network device learns of the SSB selected by the terminal device, and sends the downlink control information by using the SSB selected by the terminal device, so that the beams of the network device and the terminal device are aligned, thereby improving the PDCCH transmission success rate.

In another possible design, the CG-UCI further indicates at least one of a hybrid automatic repeat request identifier HARQ ID, a redundancy version, and a new transmission indication.

According to a third aspect, an embodiment of this application provides a data transmission apparatus, including: a processing module, configured to: in a radio resource control RRC inactive state, select a first synchronization signal block SSB at first time; and a sending module, configured to send first small data transmission SDT data to a network device by using a first configured grant CG resource corresponding to the first SSB, where the processing module is configured to: when signal quality of a plurality of SSBs at second time is greater than a first threshold, preferentially select the first SSB from the plurality of SSBs at the second time, and the sending module is configured to send second SDT data to the network device by using a second CG resource corresponding to the first SSB.

In another possible design, the processing module is further configured to: when signal quality of the first SSB in the signal quality of the plurality of SSBs at the second time is less than or equal to the first threshold, select a second SSB from the plurality of SSBs at the second time.

The sending module is further configured to send the second SDT data to the network device by using a CG resource corresponding to the second SSB.

In another possible design, the processing module is further configured to: when the terminal device fails to receive acknowledgment ACK indication information of the first SDT data or receives negative acknowledgment NACK indication information of the first SDT data, preferentially select the first SSB from the plurality of SSBs at the second time.

In another possible design, the processing module is further configured to: when the terminal device receives ACK indication information of the first SDT data, select a third SSB from the plurality of SSBs at the second time.

The sending module is further configured to send the second SDT data to the network device by using a CG resource corresponding to the third SSB.

In another possible design, the apparatus further includes:
a receiving module, configured to receive a first message sent by the network device, where the first message indicates to enter the RRC inactive state.

In another possible design, the first message includes duration of a first timer.

The processing module is further configured to: start the first timer when sending the first SDT data; and in a running period of the first timer, preferentially select the first SSB from the plurality of SSBs at the second time, where the second time is within the running period of the first timer.

In another possible design, the first message includes duration of a first timer.

The processing module is further configured to start the first timer when sending the first SDT data; and after the first timer expires, the terminal device selects a fourth SSB from the plurality of SSBs at the second time.

The sending module is further configured to send the second SDT data to the network device by using a CG resource corresponding to the fourth SSB, where the second time is after expiration time of the first timer.

In another possible design, the first message further includes N CG-SDT configurations and N control resource sets and/or N search spaces, one CG-SDT configuration corresponds to one control resource set and/or one search space, and the CG-SDT configuration indicates a CG-SDT resource set, where N is an integer greater than or equal to 1.

In another possible design, the receiving module is further configured to receive downlink control information from the network device by using a control resource set corresponding to the first SSB and/or a search space corresponding to the first SSB, and the downlink control information indicates an uplink resource or a downlink resource; and
the sending module is further configured to send third SDT data to the network device by using the uplink resource; or
the receiving module is further configured to receive the third SDT data from the network device by using the downlink resource.

In another possible design, the sending module is further configured to send configured grant CG-uplink control information UCI to the network device by using the second CG resource corresponding to the first SSB, and the CG-UCI indicates a first SSB index.

In another possible design, the sending module is further configured to send CG-UCI and a demodulation reference signal DMRS to the network device by using the second CG resource corresponding to the first SSB, the CG-UCI indicates a part of a first SSB index, and the DMRS indicates the other part of the first SSB index.

In another possible design, the CG-UCI further indicates at least one of a hybrid automatic repeat request identifier HARQ ID, a redundancy version, and a new transmission indication.

For operations performed by the data transmission apparatus and beneficial effects, refer to the method and beneficial effects in the first aspect. Details are not described again.

According to a fourth aspect, an embodiment of this application provides a data transmission apparatus, including: a receiving module, configured to receive first small data transmission SDT data that is sent by a terminal device in a radio resource control RRC inactive state by using a first configured grant CG resource corresponding to a first SSB; and the receiving module is further configured to receive second SDT data that is sent by the terminal device by using a second CG resource corresponding to the first SSB.

In another possible design, the apparatus further includes:
a sending module, configured to send a first message to the terminal device, where the first message indicates to enter the RRC inactive state.

In another possible design, the first message includes duration of a first timer, and the duration of the first timer indicates time for selecting the first SSB.

In another possible design, the first message further includes N CG-SDT configurations and N control resource sets and/or N search spaces, one CG-SDT configuration corresponds to one control resource set and/or one search space, and the CG-SDT configuration indicates a CG-SDT resource set, where N is an integer greater than or equal to 1.

In another possible design, the sending module is further configured to send downlink control information to the terminal device by using a control resource set corresponding to the first SSB and/or a search space corresponding to the first SSB, and the downlink control information indicates an uplink resource or a downlink resource; and
the receiving module is further configured to receive, on the uplink resource, third SDT data sent by the terminal device; or the sending module is further configured to send the third SDT data to the terminal device on the downlink resource.

In another possible design, the receiving module is further configured to receive CG-UCI that is sent by the terminal device by using the second CG resource corresponding to the first SSB, and the CG-UCI indicates a first SSB index.

In another possible design, the receiving module is further configured to receive CG-UCI and a DMRS that are sent by the terminal device by using the second CG resource corresponding to the first SSB, the CG-UCI indicates a part of a first SSB index, and the DMRS indicates the other part of the first SSB index.

In another possible design, the CG-UCI further indicates at least one of a hybrid automatic repeat request identifier HARQ ID, a redundancy version, and a new transmission indication.

For operations performed by the data transmission apparatus and beneficial effects, refer to the method and beneficial effects in the second aspect. Details are not described again.

According to a fifth aspect, an embodiment of this application provides a data transmission apparatus. The data transmission apparatus is configured to implement the method and functions performed by the terminal device in the first aspect, and is implemented by hardware/software. The hardware/software thereof includes a module corresponding to the function.

According to a sixth aspect, an embodiment of this application provides a data transmission apparatus. The data transmission apparatus is configured to implement the method and functions performed by the network device in the second aspect, and is implemented by hardware/software. The hardware/software thereof includes a module corresponding to the function.

According to a seventh aspect, this application provides a data transmission apparatus. The apparatus may be a terminal device, an apparatus in the terminal device, or an apparatus that can be used together with the terminal device. The data transmission apparatus may alternatively be a chip system. The data transmission apparatus may perform the method according to the first aspect. A function of the data transmission apparatus may be implemented by hardware, or may be implemented by hardware by executing corresponding software. The hardware or the software includes one or more modules corresponding to the function. The module may be software and/or hardware. For operations performed by the data transmission apparatus and beneficial effects, refer to the method and beneficial effects in the first aspect. Details are not described again.

According to an eighth aspect, this application provides a data transmission apparatus. The apparatus may be a network device, an apparatus in the network device, or an apparatus that can be used together with the network device. The data transmission apparatus may alternatively be a chip system. The data transmission apparatus may perform the method according to the second aspect. A function of the data transmission apparatus may be implemented by hardware, or may be implemented by hardware by executing corresponding software. The hardware or the software includes one or more modules corresponding to the function. The module may be software and/or hardware. For operations performed by the data transmission apparatus and beneficial effects, refer to the method and beneficial effects in the second aspect. Details are not described again.

According to a ninth aspect, this application provides a data transmission apparatus. The data transmission apparatus includes a processor. When the processor invokes a computer program in a memory, the method according to either the first aspect or the second aspect is performed.

According to a tenth aspect, this application provides a data transmission apparatus. The data transmission apparatus includes a processor and a memory. The memory is configured to store computer-executable instructions. The processor is configured to execute the computer-executable instructions stored in the memory, to enable the data transmission apparatus to perform the method according to either the first aspect or the second aspect.

According to an eleventh aspect, this application provides a data transmission apparatus. The data transmission apparatus includes a processor, a memory, and a transceiver. The transceiver is configured to receive a channel or a signal, or send a channel or a signal. The memory is configured to store program code. The processor is configured to invoke the program code from the memory to perform the method according to either the first aspect or the second aspect.

According to a twelfth aspect, this application provides a data transmission apparatus. The data transmission apparatus includes a processor and an interface circuit. The interface circuit is configured to receive code instructions and transmit the code instructions to the processor. The processor runs the code instructions to perform the method according to either the first aspect or the second aspect.

According to a thirteenth aspect, this application provides a computer-readable storage medium. The computer-readable storage medium stores instructions. When the instructions are executed, the method according to either the first aspect or the second aspect is implemented.

According to a fourteenth aspect, this application provides a computer program product including instructions. When the instructions are executed, the method according to either the first aspect or the second aspect is implemented.

According to a fifteenth aspect, an embodiment of this application provides a communication system. The communication system includes at least one terminal device and at least one network device. The terminal device is configured to perform the steps in the first aspect, and the network device is configured to perform the steps in the second aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1(A) is a schematic diagram of an architecture of a communication system according to an embodiment of this application;
FIG. 1(B) is a schematic diagram of an architecture of another communication system according to an embodiment of this application;
FIG. 2 is a schematic diagram of resuming from an RRC inactive state to an RRC connected state;
FIG. 3 is a schematic flowchart of a data transmission method according to an embodiment of this application;
FIG. 4 is a schematic flowchart of another data transmission method according to an embodiment of this application;
FIG. 5 is a schematic diagram of a CG-SDT configuration periodicity;
FIG. 6 is a schematic flowchart of another data transmission method according to an embodiment of this application;
FIG. 7 is a schematic flowchart of another data transmission method according to an embodiment of this application;
FIG. 8 is a schematic diagram of a structure of a data transmission apparatus according to an embodiment of this application;
FIG. 9 is a schematic diagram of a structure of another data transmission apparatus according to an embodiment of this application;
FIG. 10 is a schematic diagram of a structure of a terminal device according to an embodiment of this application; and
FIG. 11 is a schematic diagram of a structure of a network device according to an embodiment of this application.

### DESCRIPTION OF EMBODIMENTS

The following describes embodiments of this application with reference to the accompanying drawings in embodiments of this application.

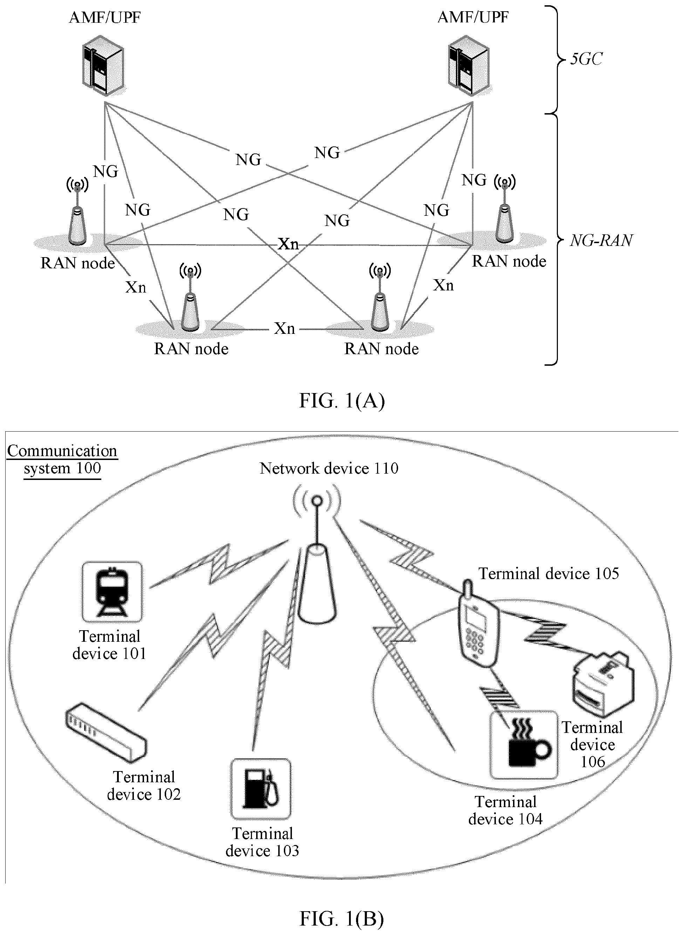

FIG. 1(A) is a schematic diagram of an architecture of a communication system according to an embodiment of this application. The communication system includes a next generation radio access network (next generation radio access network, NG-RAN) and a core network (SGC, 5th generation core network). The NG-RAN is used to implement functions related to radio access. The NG-RAN mainly includes a RAN node, and the core network mainly includes an access and mobility management function (access and mobility management function, AMF) entity and a user plane function (user plane function, UPF) entity.

The RAN node is a device that provides radio access for a terminal device. The RAN node includes a 5G base station (next generation NodeB, gNB) or an LTE base station (not next generation evolved NodeB, ng-eNB). The gNB provides terminations of user plane and control plane protocols in new radio (new radio, NR). The ng-eNB provides terminations of user plane and control plane protocol stacks of an evolved UMTS terrestrial radio access network (evolved UMTS terrestrial radio access network, E-UTRAN). Connections are established between gNBs, between the gNB and the ng-eNB, and between ng-eNBs through Xn interfaces. The gNB and the ng-eNB are connected to the SGC through next generation (next generation, NG) interfaces. Specifically, the gNB and the ng-eNB are connected to the AMF entity through NG-C interfaces, and the gNB and the ng-eNB are connected to the UPF entity through NR-U interfaces.

The AMF entity is mainly responsible for mobility management in a mobile network, for example, user location update, user registration with a network, and user handover. The UPF entity is mainly responsible for user packet processing, for example, forwarding and charging.

FIG. 1(B) is a schematic diagram of an architecture of another communication system according to an embodiment of this application. The communication system 100 may include a network device 110 and a terminal device 101 to a terminal device 106. It should be understood that the communication system 100 to which the method in embodiments of this application is applicable may include more or fewer network devices or terminal devices. The network device or the terminal device may be hardware, may be software obtained through functional division, or may be a combination thereof. The network device and the terminal device may communicate with each other through another device or network element. In the communication system 100, the network device 110 may send downlink data to the terminal device 101 to the terminal device 106. Certainly, the terminal device 101 to the terminal device 106 may alternatively send uplink data to the network device 110. The terminal device 101 to the terminal device 106 each may be a cellular phone, a smartphone, a portable computer, a handheld communication device, a handheld computing device, a satellite radio apparatus, a global positioning system, a personal digital assistant (personal digital assistant, PDA), and/or any other suitable device configured to perform communication in the wireless communication system 100. The network device 110 may be a long term evolution (long term evolution, LTE) network device and/or an NR network device, and may be specifically a NodeB (NodeB), an evolved NodeB (eNodeB), a base station in a 5G mobile communication system, a next generation NodeB (next generation NodeB, gNB), a base station in a future mobile communication system, or an access node in a Wi-Fi system.

The communication system 100 may use a public land mobile network (public land mobile network, PLMN), vehicle to everything (vehicle to everything, V2X), a device-to-device (device-to-device, D2D) network, a machine to machine (machine to machine, M2M) network, the internet of things (internet of things, IoT), or another network. In addition, the terminal device 104 to the terminal device 106 may alternatively form a communication system. In the communication system, the terminal device 105 may send downlink data to the terminal device 104 or the terminal device 106. The method in embodiments of this application may be applied to the communication system 100 shown in FIG. 1(B).

The 3rd generation partnership project (3rd generation partnership project, 3GPP) introduces three RRC states in a 5G network: an RRC idle (RRC IDLE) state, an RRC inactive (RRC INACTIVE) state, and an RRC connected (RRC CONNECTED) state.

In the RRC connected state, there is a dedicated RRC connection between the terminal device and the network device. The dedicated RRC connection may be a connection of a data radio bearer (data radio bearer, DRB) or a signaling radio bearer 1 (signaling radio bearer 1, SRB 1).

In the RRC idle state, there is no dedicated RRC connection between the terminal device and the network device.

In the RRC inactive state, the terminal device may not need to notify the network device when the terminal device moves within coverage of the network device. The terminal device stores a context of the terminal device, and a last base station serving the terminal device (Last serving gNB) stores the context of the terminal device and NG connections to the AMF entity and the UPF. A dedicated RRC connection between the terminal device and the network device is suspended, and may be resumed subsequently. The terminal device performs cell reselection in the RRC inactive state.

The RRC inactive state is an RRC state newly added in 5G, aiming at enabling the terminal device to quickly resume to the RRC connected state without performing re-access. In both the RRC idle state and the RRC inactive state, only content paging (paging) in a common search space can be received and cell reselection can be performed, where a cell reselection principle in the RRC inactive state is the same as that in the RRC idle state. A power consumption level similar to that in the RRC idle state may be obtained in the RRC inactive state because the terminal device in the RRC inactive state suspends data processing. If the terminal device moves within coverage of a same network device, the terminal device does not need to exchange information with the network device. However, if UE moves out of coverage of the network device, a radio access network notification area (RAN notification area, RNA) update process needs to be started. The UE in the RRC inactive state may have a lower data transmission resume delay because the UE in the RRC inactive state may quickly resume to the RRC connected state through an RRC resume (resume) procedure.

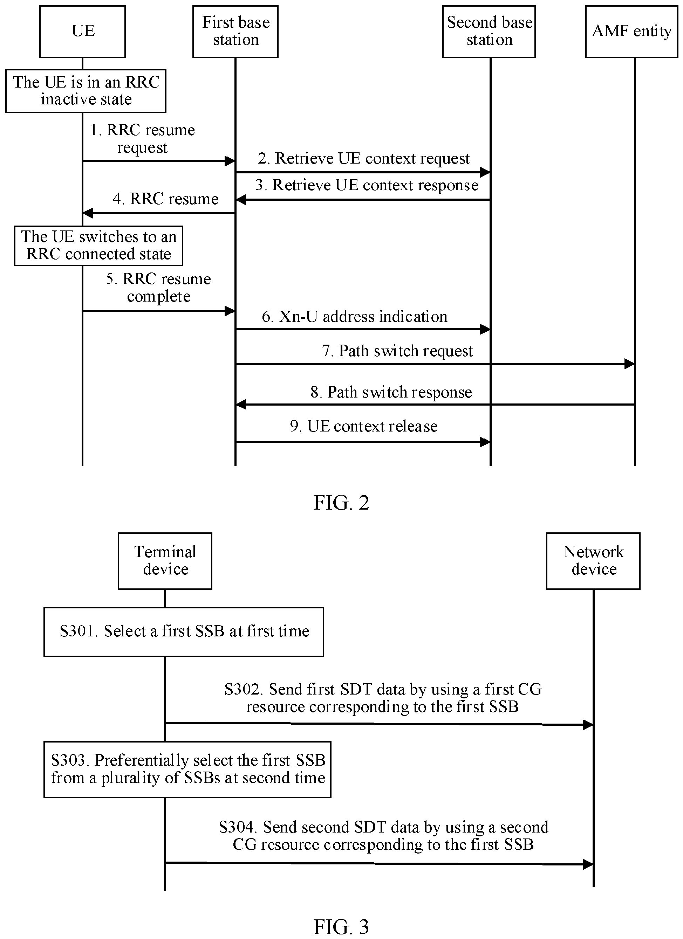

FIG. 2 is a schematic diagram of resuming from an RRC inactive state to an RRC connected state. The following provides descriptions by using a terminal device as UE and a last serving gNB as a second base station. The second base station stores a context of the UE. The UE moves out of coverage of the second base station, enters coverage of a first base station, and initiates an RRC resume process.
1. When the terminal device is in an inactive state, the terminal device sends an RRC resume request (RRC resume request) to the first base station. The RRC resume request may carry an inactive radio network temporary identifier (inactive radio network temporary identifier, I-RNTI).
2. The first base station sends a retrieve UE context request (retrieve UE context request) to the second base station. The retrieve UE context request may include the I-RNTI. The second base station may determine a context of the terminal device based on the I-RNTI.
3. The second base station sends a retrieve UE context response (retrieve UE context response) to the first base station. The retrieve UE context response includes the context of the UE.
4. The first base station sends an RRC resume (RRC resume) message to the terminal device. After receiving the RRC resume message, the UE enters an RRC connected state, and an RRC connection is resumed.
5. The UE sends an RRC resume complete (RRC resume complete) message to the first base station.
6. The first base station sends an Xn-U address indication (Xn-U address indication) to the second base station.
   The Xn-U address indication indicates a tunnel address for forwarding data by the second base station, and the data is mainly downlink data. In this case, if the second base station has downlink data of the UE, the second base station may send the downlink data to the first base station, and then the first base station sends the downlink data to the UE.
7. The first base station sends a path switch request (path switch request) to an AMF entity. The path switch request is used to switch a path, to switch a connection between a UPF entity and the second base station to a connection between the UPF entity and the first base station, so that subsequent downlink data is directly sent by the UPF entity to the first base station instead of the second base station.
8. The AMF entity sends a path switch response (path switch response) to the first base station.
9. The first base station sends a UE context release (UE context release) message to the second base station. The UE context release message indicates the second base station to release the context of the UE.

A signaling procedure for switching from an RRC idle state to an RRC connected state is actually an initial access process of the UE, including random access, RRC connection setup, and initial context setup. After the signaling procedure is compared with a signaling procedure for switching from an RRC inactive state to an RRC connected state, it can be found that a large amount of signaling exchange can be saved through an RRC resume procedure in the RRC inactive state. For example, an RRC reconfiguration process and a security mode configuration process are saved on a Uu interface, and a context setup process and an authentication procedure are saved on an NG interface. In this way, the UE can access a network more quickly in the RRC inactive state than in the RRC idle state.

Currently, two main solutions for data transmission in an RRC inactive state are being discussed in a standard: RRC-less SDT and RRC-based SDT.

For the RRC-based SDT, an RRC resume request (RRC resume request) needs to be sent. To enable a network device to learn of a downlink beam of a terminal device, the terminal device preferentially selects an SSB, and sends SDT data to the network device by using the selected SSB. Once the network device receives the SDT data, the network device may determine, based on a correspondence between the SDT data and the SSB, the SSB selected by the terminal device, and send a PDCCH to the terminal device by using a beam corresponding to the selected SSB. A detailed process is as follows:
Step 1: The terminal device receives an RRC release (RRC release) message sent by the network device. The RRC release message includes a configured grant (configured grant, CG) resource and an SSB set (SSB set) corresponding to the CG resource.
Step 2: The terminal device selects an SSB, and sends an RRC resume request (resume request) and uplink SDT data to the network device by using a CG resource corresponding to the selected SSB. If the network device does not receive the uplink SDT data, the network device may send downlink control information (downlink control information, DCI) by using a PDCCH and a beam of the selected SSB. The DCI indicates the terminal device to retransmit the uplink SDT data. The SDT data may be DRB data, or may be data of an SRB 1 or an SRB 2 but does not include data of an SRB 0. The RRC resume request is the data of the SRB 0.
Step 3: If the SDT data is not successfully sent or is not completely sent, the terminal device sends subsequent SDT data (subsequent SDT data) to the network device by using the CG resource, or the terminal device receives subsequent DL SDT data sent by the network device.
Step 4: The terminal device receives the RRC release (RRC release) message from the network device.

How to select an SSB during subsequent (subsequent) transmission in step 3 has not been discussed currently. As a result, beams of the network device and the terminal device may not be aligned, and transmission of the PDCCH sent by the network device fails.

To resolve the foregoing technical problems, embodiments of this application provide the following solutions.

FIG. 3 is a schematic flowchart of a data transmission method according to an embodiment of this application. The method includes at least the following steps.

S301. When a terminal device is in a radio resource control RRC inactive state, the terminal device selects a first synchronization signal block SSB at first time.

Optionally, before selecting the first synchronization signal block SSB at the first time, the terminal device may receive a first message sent by a network device. The first message may be a first RRC release message, and the first message includes a CG-SDT configuration. The terminal device may switch from an RRC connected state to the RRC inactive state based on the first RRC release message. In the radio resource control RRC inactive state, the first SSB is selected at the first time.

The CG-SDT configuration may include one or more of the following information: a periodicity, CG resources (CG resources numbered from 1 to 10), and an SSB set (an SSB 1 and an SSB 2) corresponding to the CG-SDT configuration. One CG-SDT configuration corresponds to one SSB set. For example, a CG-SDT configuration 1 corresponds to an SSB set 1 (the SSB 1 and the SSB 2), and a CG-SDT configuration 2 corresponds to an SSB set 2 (an SSB 3 and an SSB 4).

The first time may be a moment, a slot, or a time period.

Optionally, after receiving the CG-SDT configuration, the terminal device determines a correspondence between the CG resource and an SSB. For example, CG resources (a CG resource 1, a CG resource 3, a CG resource 5, a CG resource 7, and a CG resource 9) with odd numbers correspond to the SSB 1, and CG resources (a CG resource 2, a CG resource 4, a CG resource 6, a CG resource 8, and a CG resource 10) with even numbers correspond to the SSB 2. Each CG resource is on a different slot (slot).

Optionally, the terminal device may select the first SSB from a plurality of SSBs at the first time based on signal quality of each of the plurality of SSBs. Signal quality of the first SSB at the first time is greater than a first threshold, and signal quality of another SSB other than the first SSB in the plurality of SSBs may be greater than the first threshold, or may not be greater than the first threshold. Further, any SSB may be selected as the first SSB at the first time from one or more SSBs whose signal quality is greater than the first threshold. Alternatively, an SSB with strongest signal quality is selected as the first SSB at the first time from one or more SSBs whose signal quality is greater than the first threshold. The signal quality may be reference signal received power (reference signal received power, RSRP).

Optionally, the terminal device may select a first CG resource based on the first SSB. For example, the first SSB is the SSB 1, and a second SSB is the SSB 2. Because the SSB 1 corresponds to the CG resource 1, the CG resource 3, the CG resource 5, the CG resource 7, and the CG resource 9, the terminal device may select the CG resource 1 from the CG resource 1, the CG resource 3, the CG resource 5, the CG resource 7, and the CG resource 9, instead of selecting the CG resource (the CG resource 2, the CG resource 4, the CG resource 6, the CG resource 8, and the CG resource 10) corresponding to the SSB 2.

It should be noted that, at the first time, only the first CG resource corresponding to the first SSB is delivered to a logical channel prioritization (logical channel prioritization, LCP) entity for packet assembly, to generate a protocol data unit (protocol data unit, PDU) of first SDT data, and another CG resource is not delivered to the LCP for packet assembly. The another CG resource may be another CG resource in the CG-SDT configuration. For example, the first SSB is the SSB 1. When the CG resource 1 corresponding to the SSB 1 is selected, the CG resource 1 is delivered to the LCP entity for packet assembly, but the CG resource 2 to the CG resource 10 are not delivered to the LCP for packet assembly. The another CG resource may alternatively be a CG resource in another CG-SDT configuration. For example, the another CG resource may be a CG resource corresponding to the CG-SDT configuration 2.

S302. The terminal device sends first small data transmission SDT data to the network device by using a first configured grant CG resource corresponding to the first SSB.

The first SDT data may be an RRC resume request (RRC resume request) or user data. A HARQ process of the first SDT data is a HARQ process 1.

It should be noted that when SDT data of the terminal device is not completely sent or the first SDT data is not successfully sent, subsequent (subsequent) transmission is performed.

S303. When signal quality of a plurality of SSBs at second time is greater than the first threshold, the terminal device preferentially selects the first SSB from the plurality of SSBs at the second time.

S304. The terminal device sends second SDT data to the network device by using a second CG resource corresponding to the first SSB.

Specifically, when signal quality of the first SSB at the second time is greater than the first threshold, a first SSB used previously is preferentially selected, and even if signal quality of another SSB other than the first SSB in the plurality of SSBs is greater than the first threshold, the another SSB is not selected. After the first SSB is selected, the second CG resource may be selected based on the first SSB, and the second SDT data is sent to the network device by using the second CG resource corresponding to the first SSB.

For example, the first SSB is the SSB 1, and the another SSB is the SSB 2. The SSB 1 corresponds to the CG resource 1, the CG resource 3, the CG resource 5, the CG resource 7, and the CG resource 9. The CG resource 1 corresponding to the SSB 1 is previously used to transmit the first SDT data. Therefore, the SSB 1 is still selected currently, and the CG resource 3 corresponding to the SSB 1 is selected to send the second SDT data to the network device by using the CG resource 3 corresponding to the SSB 1.

The second time may be a moment, a slot, or a time period. The second time is different from the first time.

The second SDT data may be re-transmitted first SDT data, or may be newly transmitted SDT data. The second SDT data may be user data.

It should be noted that, at the second time, only the second CG resource corresponding to the first SSB is delivered to a logical channel prioritization (logical channel prioritization, LCP) entity for packet assembly, to generate a protocol data unit (protocol data unit, PDU) of the second SDT data, and another CG resource is not delivered to the LCP for packet assembly. The another CG resource may be another CG resource in the CG-SDT configuration. For example, the first SSB is the SSB 1. When the CG resource 3 corresponding to the SSB 1 is selected, the CG resource 3 is delivered to the LCP entity for packet assembly, but the CG resource 1, the CG resource 2, and the CG resource 4 to the CG resource 10 are not delivered to the LCP for packet assembly. The another CG resource may alternatively be a CG resource in another CG-SDT configuration, for example, the CG-SDT configuration 2.

Optionally, when signal quality of the first SSB in the signal quality of the plurality of SSBs at the second time is less than or equal to the first threshold, the terminal device selects a second SSB from the plurality of SSBs at the second time, and sends the second SDT data to the network device by using a CG resource corresponding to the second SSB. Signal quality of the second SSB at the second time is greater than the first threshold.

Optionally, when the terminal device fails to receive acknowledgment ACK indication information of the first SDT data or receives negative acknowledgment NACK indication information of the first SDT data, the terminal device preferentially selects the first SSB from the plurality of SSBs at the second time.

Alternatively, when the terminal device receives ACK indication information of the first SDT data, the terminal device selects a third SSB from the plurality of SSBs at the second time, and sends the second SDT data to the network device by using a CG resource corresponding to the third SSB. Signal quality of the third SSB at the second time is greater than the first threshold. The first SDT data and the second SDT data are different SDT data.

It should be noted that, if previous SDT data is not successfully sent or the SDT data is not completely sent, the first SSB may be preferentially selected again, and the SDT data is sent to the network device by using the CG resource corresponding to the first SSB, until the SDT data is successfully sent or the SDT data is completely sent.

Optionally, after receiving the second SDT data sent by the terminal device, the network device may send a second RRC release message to the terminal device. After receiving the second RRC release message, the terminal device terminates an SDT process.

In this embodiment of this application, when the signal quality of the plurality of SSBs is greater than the first threshold, an SSB used for previous SDT data transmission is preferentially selected from the plurality of SSBs, so that the terminal device does not need to reselect an SSB, thereby improving data transmission efficiency, aligning beams of the network device and the terminal device, and improving a PDCCH transmission success rate.

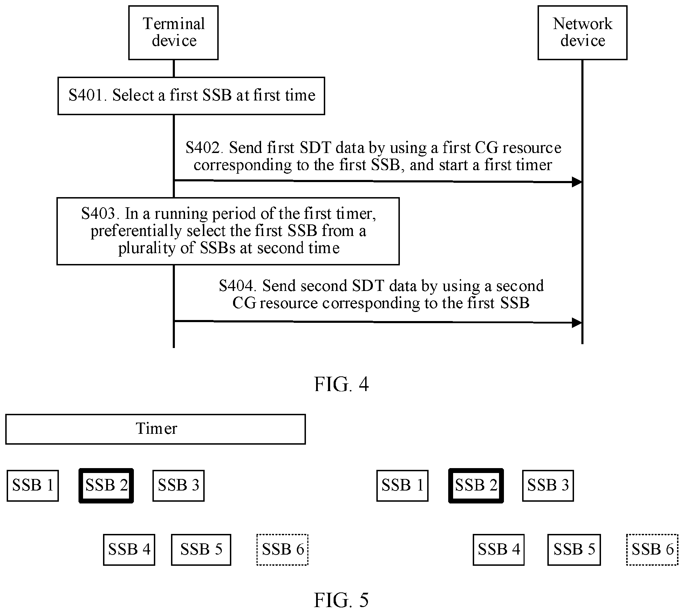

FIG. 4 is a schematic flowchart of a data transmission method according to an embodiment of this application. The method includes at least the following steps.

S401. When a terminal device is in a radio resource control RRC inactive state, the terminal device selects a first synchronization signal block SSB at first time.

Optionally, before selecting the first synchronization signal block SSB at the first time, the terminal device may receive a first message sent by a network device. The first message may be a first RRC release message, and the first message includes a CG-SDT configuration. The terminal device may switch from an RRC connected state to the RRC inactive state based on the first RRC release message. In the radio resource control RRC inactive state, the first SSB is selected at the first time.

The CG-SDT configuration may include one or more of the following information: duration of a first timer, a periodicity, CG resources (CG resources numbered from 1 to 10), and an SSB set (an SSB 1 and an SSB 2) corresponding to the CG-SDT configuration. One CG-SDT configuration corresponds to one SSB set. For example, a CG-SDT configuration 1 corresponds to an SSB set 1 (the SSB 1 and the SSB 2), and a CG-SDT configuration 2 corresponds to an SSB set 2 (an SSB 3 and an SSB 4).

The first time may be a moment, a slot, or a time period.

Optionally, after receiving the CG-SDT configuration, the terminal device determines a correspondence between the CG resource and an SSB. For example, CG resources (a CG resource 1, a CG resource 3, a CG resource 5, a CG resource 7, and a CG resource 9) with odd numbers correspond to the SSB 1, and CG resources (a CG resource 2, a CG resource 4, a CG resource 6, a CG resource 8, and a CG resource 10) with even numbers correspond to the SSB 2. Each CG resource is on a different slot (slot).

It should be noted that, for a CG-SDT configuration, all SSBs corresponding to the CG-SDT configuration are sequentially associated in an association periodicity. In a next association periodicity, all the SSBs corresponding to the CG-SDT configuration are repeatedly associated. One CG resource may be associated with one or more SSBs.

For example, FIG. 5 shows two CG-SDT configurations. An SSB set corresponding to a CG configuration 1 includes an SSB 1, an SSB 2, and an SSB 3, and an SSB set corresponding to a CG configuration 2 includes an SSB 4, an SSB 5, and an SSB 6. Each CG configuration has its own association periodicity. For the CG configuration 1, associating the SSB 1, the SSB 2, and the SSB 3 once is considered as one association periodicity. For example, from the 1^{st} SSB 2 (in bold) to the 2^{nd} SSB 2 in FIG. 5 may be considered as one association periodicity. For the CG configuration 2, associating the SSB 4, the SSB 5, and the SSB 6 once is considered as one association periodicity. For example, from the 1^{st} SSB 6 (dotted line) to the 2^{nd} SSB 6 in FIG. 5 may be considered as one association periodicity.

Optionally, the terminal device may select the first SSB from a plurality of SSBs at the first time based on signal quality of each of the plurality of SSBs. Signal quality of the first SSB at the first time is greater than a first threshold, and signal quality of another SSB other than the first SSB in the plurality of SSBs may be greater than the first threshold, or may not be greater than the first threshold. Further, any SSB may be selected as the first SSB at the first time from one or more SSBs whose signal quality is greater than the first threshold. Alternatively, an SSB with strongest signal quality is selected as the first SSB at the first time from one or more SSBs whose signal quality is greater than the first threshold. The signal quality may be reference signal received power (reference signal received power, RSRP).

Optionally, the terminal device may select a first CG resource based on the first SSB. For example, the first SSB is the SSB 1, and a second SSB is the SSB 2. Because the SSB 1 corresponds to the CG resource 1, the CG resource 3, the CG resource 5, the CG resource 7, and the CG resource 9, the terminal device may select the CG resource 1 from the CG resource 1, the CG resource 3, the CG resource 5, the CG resource 7, and the CG resource 9, instead of selecting the CG resource (the CG resource 2, the CG resource 4, the CG resource 6, the CG resource 8, and the CG resource 10) corresponding to the SSB 2.

It should be noted that, at the first time, only the first CG resource corresponding to the first SSB is delivered to a logical channel prioritization (logical channel prioritization, LCP) entity for packet assembly, to generate a protocol data unit (protocol data unit, PDU) of first SDT data, and another CG resource is not delivered to the LCP for packet assembly. The another CG resource may be another CG resource in the CG-SDT configuration. For example, the first SSB is the SSB 1. When the CG resource 1 corresponding to the SSB 1 is selected, the CG resource 1 is delivered to the LCP entity for packet assembly, but the CG resource 2 to the CG resource 10 are not delivered to the LCP for packet assembly. The another CG resource may alternatively be a CG resource in another CG-SDT configuration. For example, the another CG-SDT configuration may be the CG-SDT configuration 2.

S402. The terminal device sends first small data transmission SDT data to the network device by using a first configured grant CG resource corresponding to the first SSB. In addition, the first timer is started when the first SDT data is sent.

The first SDT data may be an RRC resume request (RRC resume request) or user data. A HARQ process of the first SDT data is a HARQ process 1.

Running duration of the first timer is the duration of the first timer in the CG-SDT configuration.

It should be noted that when SDT data of the terminal device is not completely sent or the first SDT data is not successfully sent, subsequent (subsequent) transmission is performed.

S403. In a running period of the first timer, the terminal device preferentially selects the first SSB from the plurality of SSBs at second time, where the second time is within the running period of the first timer.

S404. The terminal device sends second SDT data to the network device by using a second CG resource corresponding to the first SSB.

Specifically, in the running period of the first timer (or in a CG-SDT association periodicity), when signal quality of the plurality of SSBs at the second time is greater than the first threshold, the terminal device preferentially selects the first SSB from the plurality of SSBs, and even if signal quality of another SSB other than the first SSB in the plurality of SSBs is greater than the first threshold, the another SSB is not selected. After the first SSB is selected, the second CG resource may be selected based on the first SSB, and the second SDT data is sent to the network device by using the second CG resource corresponding to the first SSB.

For example, the first SSB is the SSB 1, and another SSB is the SSB 2. In this case, the SSB 1 corresponds to the CG resource 1, the CG resource 3, the CG resource 5, the CG resource 7, and the CG resource 9. The CG resource 1 corresponding to the SSB 1 is previously used to transmit the first SDT data. Therefore, the SSB 1 is still selected currently, and the CG resource 3 corresponding to the SSB 1 is selected to send the second SDT data to the network device by using the CG resource 3 corresponding to the SSB 1.

The second time may be a moment, a slot, or a time period. The second time is different from the first time.

The second SDT data may be user data.

The first timer may be an existing configured grant timer (configured grant timer) or a configured grant retransmission timer. During a running period of the authorization retransmission timer, CG retransmission is forbidden.

It should be noted that, at the second time, only the second CG resource corresponding to the first SSB is delivered to a logical channel prioritization (logical channel prioritization, LCP) entity for packet assembly, to generate a protocol data unit (protocol data unit, PDU) of the second SDT data, and another CG resource is not delivered to the LCP for packet assembly. The another CG resource may be another CG resource in the CG-SDT configuration. For example, the first SSB is the SSB 1. When the CG resource 3 corresponding to the SSB 1 is selected, the CG resource 3 is delivered to the LCP entity for packet assembly, but the CG resource 1, the CG resource 2, and the CG resource 4 to the CG resource 10 are not delivered to the LCP for packet assembly. The another CG resource may alternatively be a CG resource in another CG-SDT configuration, for example, a CG resource corresponding to the CG-SDT configuration 2.

Optionally, the terminal device starts the first timer when sending the first SDT data. After the first timer expires, the terminal device selects a fourth SSB from the plurality of SSBs at the second time, and sends the second SDT data to the network device by using a CG resource corresponding to the fourth SSB, where the second time is after expiration time of the first timer.

Optionally, after receiving the second SDT data sent by the terminal device, the network device may send a second RRC release message to the terminal device. After receiving the second RRC release message, the terminal device terminates an SDT process.

In this embodiment of this application, in a running period of the first timer, the terminal device preferentially selects, from the plurality of SSBs at the second time, an SSB used for the previous SDT data transmission, so that the terminal device does not need to reselect an SSB, thereby aligning beams of the network device and the terminal device, and improving a PDCCH transmission success rate.

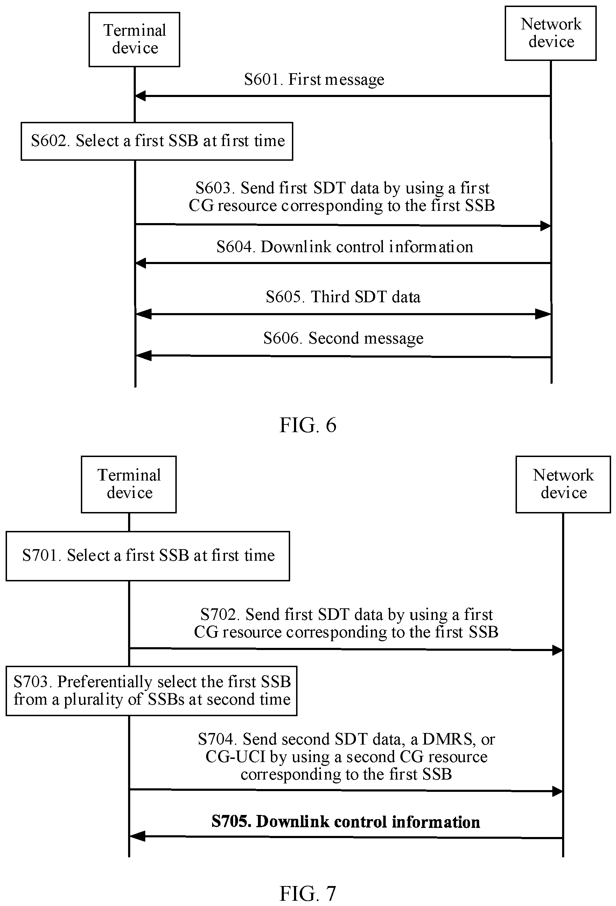

FIG. 6 is a schematic flowchart of a data transmission method according to an embodiment of this application. The method includes at least the following steps.

S601: A terminal device receives a first message sent by a network device.

The first message may be a first RRC release message. The terminal device may switch from an RRC connected state to an RRC inactive state based on a first RRC release message.

The first RRC release message may include: N CG-SDT configurations, N control resource sets (CORESET Pool) and/or N search spaces, one CG-SDT configuration corresponds to one control resource set and/or one search space, and the CG-SDT configuration indicates a CG-SDT resource set, where N is an integer greater than or equal to 1.

It should be noted that one control resource set corresponds to one transmission reception point (transmission reception point, TRP). Different TRPs correspond to different coverage, and N TRPs corresponding to the N control resource sets belong to a same cell. Different CORESET pools indicate different CORESET resources. The CORESET pool is a time-frequency resource of downlink control information.

For example, the first RRC release message includes a first CORESET pool and a second CORESET pool, a CG-SDT configuration 1 and a CG-SDT configuration 2, and a correspondence between the CORESET pool and the CG-SDT configuration. The CG-SDT configuration 1 corresponds to the first CORESET pool, and the CG-SDT configuration 2 corresponds to the second CORESET pool. Specifically, an ID of the CORESET pool is carried in the CG-SDT configuration, or an ID configured by the CG-SDT is carried in a CORESET configuration.

The CG-SDT configuration may include one or more of the following information: a periodicity, CG resources (CG resources numbered from 1 to 10), and an SSB set (an SSB 1 and an SSB 2) corresponding to the CG-SDT configuration. One CG-SDT configuration corresponds to one SSB set. For example, a CG-SDT configuration 1 corresponds to an SSB set 1 (the SSB 1 and the SSB 2), and a CG-SDT configuration 2 corresponds to an SSB set 2 (an SSB 3 and an SSB 4).

First time may be a moment, a slot, or a time period.

Optionally, after receiving the CG-SDT configuration, the terminal device determines a correspondence between the CG resource and an SSB. For example, CG resources (a CG resource 1, a CG resource 3, a CG resource 5, a CG resource 7, and a CG resource 9) with odd numbers correspond to the SSB 1, and CG resources (a CG resource 2, a CG resource 4, a CG resource 6, a CG resource 8, and a CG resource 10) with even numbers correspond to the SSB 2. Each CG resource is on a different slot (slot).

S602. The terminal device selects a first SSB at the first time.

Specifically, the terminal device may switch from the RRC connected state to the RRC inactive state based on the first RRC release message. In the radio resource control RRC inactive state, the first SSB is selected at the first time.

Optionally, the terminal device may select the first SSB from a plurality of SSBs at the first time based on signal quality of each of the plurality of SSBs. Signal quality of the first SSB at the first time is greater than a first threshold, and signal quality of another SSB other than the first SSB in the plurality of SSBs may be greater than the first threshold, or may not be greater than the first threshold. Further, any SSB may be selected as the first SSB at the first time from one or more SSBs whose signal quality is greater than the first threshold. Alternatively, an SSB with strongest signal quality is selected as the first SSB at the first time from one or more SSBs whose signal quality is greater than the first threshold. The signal quality may be reference signal received power (reference signal received power, RSRP).

Optionally, the terminal device may select a first CG resource based on the first SSB. For example, the first SSB is the SSB 1, and a second SSB is the SSB 2. Because the SSB 1 corresponds to the CG resource 1, the CG resource 3, the CG resource 5, the CG resource 7, and the CG resource 9, the terminal device may select the CG resource 1 from the CG resource 1, the CG resource 3, the CG resource 5, the CG resource 7, and the CG resource 9, instead of selecting the CG resource (the CG resource 2, the CG resource 4, the CG resource 6, the CG resource 8, and the CG resource 10) corresponding to the SSB 2.

It should be noted that, at the first time, only the first CG resource corresponding to the first SSB is delivered to a logical channel prioritization (logical channel prioritization, LCP) entity for packet assembly, to generate a protocol data unit (protocol data unit, PDU) of first SDT data, and another CG resource is not delivered to the LCP for packet assembly. The another CG resource may be another CG resource in the CG-SDT configuration. For example, the first SSB is the SSB 1. When the CG resource 1 corresponding to the SSB 1 is selected, the CG resource 1 is delivered to the LCP entity for packet assembly, but the CG resource 2 to the CG resource 10 are not delivered to the LCP for packet assembly. The another CG resource may alternatively be a CG resource in another CG-SDT configuration. For example, the another CG resource may be a CG resource corresponding to the CG-SDT configuration 2.

S603. The terminal device sends first small data transmission SDT data to the network device by using a first configured grant CG resource corresponding to the first SSB.

The first SDT data may be an RRC resume request (RRC resume request) or user data. A HARQ process of the first SDT data is a HARQ process 1.

S604. The network device sends downlink control information to the terminal device by using a control resource set corresponding to the first SSB and/or a search space corresponding to the first SSB, and the downlink control information indicates an uplink resource or a downlink resource.

Specifically, after receiving the first SDT data, the network device may determine, based on a correspondence between a CG resource of the first SDT data and an SSB, the first SSB selected by the terminal device and the control resource set and/or the search space corresponding to the first SSB. Then, the downlink control information is sent to the terminal device by using the control resource set and/or the search space corresponding to the first SSB. The downlink control information is carried on a PDCCH. Correspondingly, the terminal device receives the downlink control information by using the control resource set and/or the search space corresponding to the first SSB.

The downlink control information and the first SSB are quasi co-located, in other words, a beam of the downlink control information is the same as a beam of the first SSB.

S605. The network device receives, on the uplink resource, third SDT data sent by the terminal device, or sends the third SDT data to the terminal device on the downlink resource. The terminal device sends third SDT data to the network device by using the uplink resource, or receives the third SDT data from the network device by using the downlink resource.

It should be noted that transmission of the SDT data is performed in a dynamic scheduling manner in S604 and S605. In this embodiment of this application, the manner shown in FIG. 3 or FIG. 4 may alternatively be used, to preferentially select the previously used first SSB to perform transmission of the SDT data. The foregoing two manners are not in a particular order.

S606. The network device sends a second message to the terminal device.

The second message may be a second RRC release message. After receiving the second RRC release message, the terminal device terminates an SDT process.

In this embodiment of this application, in a multi-TRP scenario, a correspondence between a CG-SDT configuration and a control resource set and/or a search space is defined. After receiving the first SDT data, the network device can determine a control resource set and/or a search space that are/is used to send downlink control information. The terminal device can determine a control resource set and/or a search space that are/is used to receive the downlink control information, so that the beams of the network device and the terminal device are aligned, to perform transmission of SDT data by using the uplink resource or the downlink resource. When multi-TRP SDT is supported, SDT data transmission efficiency is improved.

FIG. 7 is a schematic flowchart of a data transmission method according to an embodiment of this application. The method includes at least the following steps.

S701. When a terminal device is in a radio resource control RRC inactive state, the terminal device selects a first synchronization signal block SSB at first time.

It should be noted that a specific implementation of S701 is the same as a specific implementation of S301. For this step, refer to S301. Details are not described herein again.

S702. The terminal device sends first small data transmission SDT data to a network device by using a first configured grant CG resource corresponding to the first SSB.

It should be noted that a specific implementation of S702 is the same as a specific implementation of S302. For this step, refer to S302. Details are not described herein again.

S703. When signal quality of a plurality of SSBs at second time is greater than a first threshold, the terminal device preferentially selects the first SSB from the plurality of SSBs at the second time.

S704. The terminal device sends second SDT data, a demodulation reference signal (demodulation reference signal, DMRS), and configured grant-uplink control information (configured grant-uplink control information, CG-UCI) to the network device by using a second CG resource corresponding to the first SSB.

A first SSB index (SSB index) may be indicated in the following two manners.

In a first optional manner, the CG-UCI indicates the first SSB index.

In a second optional manner, the CG-UCI indicates a part of the first SSB index, and the DMRS indicates the other part of the first SSB index. Further, the CG-UCI may indicate a least significant bit (least significant bit, LSB) in the SSB index, and the DMRS may indicate a most significant bit (most significant bit, MSB) in the SSB index. For example, if the SSB index is 110 101, the CG-UCI carries 101, and the DMRS indicates 110.

Optionally, the CG-UCI may further indicate one or more types of the following information of the first SDT data: a hybrid automatic repeat request (hybrid automatic repeat request, HARQ) ID, a redundancy version, and a new transmission indication. The new transmission indication may indicate whether current transmission may be new transmission or retransmission. After receiving the CU-UCI, the network device may determine an SSB used for sending the second SDT data, to learn of a downlink beam of subsequent downlink control information.

Specific implementations of S703 and S704 are the same as specific implementations of S303 and S304. For this step, refer to S303 and S304. Details are not described herein again.

S705. The network device sends the downlink control information to the terminal device by using the first SSB that the terminal device corresponds to by using the SSB index, and the terminal device receives, by using the first SSB, the downlink control information sent by the network device.

A beam of the downlink control information is the same as a beam of the first SSB.

Optionally, after sending the downlink control information to the terminal device, the network device may send a second message to the terminal device. The second message may be a second RRC release message. After receiving the second RRC release message, the terminal device terminates an SDT process.

In this embodiment of this application, the SSB index is indicated by using the CG-UCI or the DMRS and the CG-UCI, so that the network device learns of an SSB selected by the terminal device, and sends the downlink control information by using the SSB selected by the terminal device, so that beams of the network device and the terminal device are aligned, thereby improving a PDCCH transmission success rate.

It may be understood that, in the foregoing method embodiments, methods and operations implemented by the terminal device may further be implemented by a component (for example, a chip or a circuit) that may be used in the terminal device, and methods and operations implemented by the network device may further be implemented by a component (for example, a chip or a circuit) that may be used in the network device.

The foregoing mainly describes the solutions provided in embodiments of this application from a perspective of interaction. It may be understood that, to implement the foregoing functions, each network element, for example, a transmit-end device or a receive-end device, includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, function modules of the terminal device or the network device may be obtained through division based on the foregoing method examples. For example, each function module may be obtained through division based on each function, or two or more functions may be integrated into one processing module. The foregoing integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

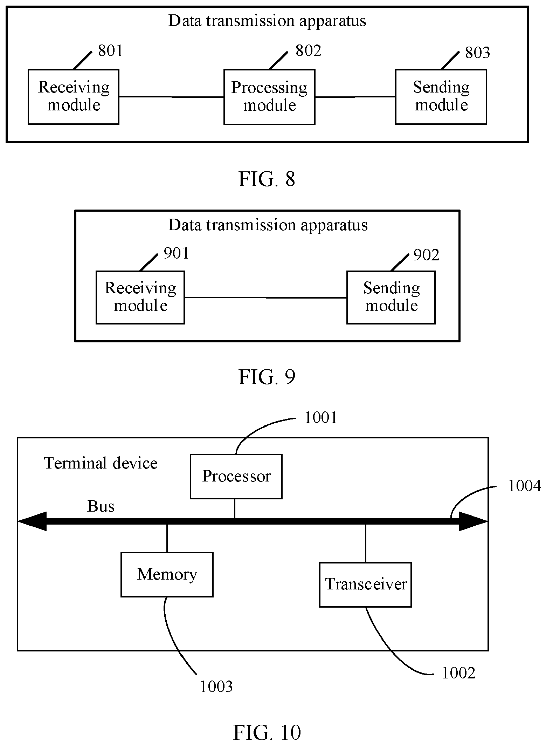

The foregoing describes in detail the methods provided in embodiments of this application with reference to FIG. 3, FIG. 4, FIG. 6, and FIG. 7. The following describes in detail data transmission apparatuses provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, details are not described herein again.

FIG. 8 is a schematic diagram of a structure of a data transmission apparatus according to an embodiment of this application. The data transmission apparatus may include a receiving module 801, a processing module 802, and a sending module 803. The receiving module 801 and the sending module 803 may communicate with the outside, and the processing module 802 is configured to perform processing, for example, select a first SSB. The receiving module 801 and the sending module 803 may also be referred to as a communication interface, a transceiver unit, or a transceiver module. The receiving module 801 and the sending module 803 may be configured to perform actions performed by the terminal device in the foregoing method embodiments.

For example, the receiving module 801 and the sending module 803 may also be referred to as a transceiver module or a transceiver unit (including a receiving unit and/or a sending unit), and are respectively configured to perform sending and receiving steps of the terminal device in the foregoing method embodiments.

In a possible design, the data transmission apparatus may implement corresponding steps or procedures performed by the terminal device in the foregoing method embodiments, for example, may be a terminal device, or a chip or a circuit disposed in the terminal device. The receiving module 801 and the sending module 803 are configured to perform receiving-related and sending-related operations on a terminal device side in the foregoing method embodiments, and the processing module 802 is configured to perform processing-related operations on the terminal device in the foregoing method embodiments.

The processing module 802 is configured to: in a radio resource control RRC inactive state, select a first synchronization signal block SSB at first time. The sending module 803 is configured to send first small data transmission SDT data to a network device by using a first configured grant CG resource corresponding to the first SSB.

The processing module 802 is configured to: when signal quality of a plurality of SSBs at second time is greater than a first threshold, select the first SSB from the plurality of SSBs at the second time. The sending module 803 is configured to send second SDT data to the network device by using a second CG resource corresponding to the first SSB.

Optionally, the processing module 802 is further configured to: when signal quality of the first SSB in the signal quality of the plurality of SSBs at the second time is less than or equal to the first threshold, select a second SSB from the plurality of SSBs at the second time.

The sending module 803 is further configured to send the second SDT data to the network device by using a CG resource corresponding to the second SSB.

Optionally, the processing module 802 is further configured to: when the terminal device fails to receive acknowledgment ACK indication information of the first SDT data or receives negative acknowledgment NACK indication information of the first SDT data, preferentially select the first SSB from the plurality of SSBs at the second time.

Optionally, the processing module 802 is further configured to: when the terminal device receives ACK indication information of the first SDT data, select a third SSB from the plurality of SSBs at the second time. The sending module 803 is further configured to send the second SDT data to the network device by using a CG resource corresponding to the third SSB.

Optionally, the receiving module 801 is configured to receive a first message sent by the network device, and the first message indicates to enter the RRC inactive state.

Optionally, the first message includes duration of a first timer.

The processing module 802 is further configured to: start the first timer when sending the first SDT data; and in a running period of the first timer, preferentially select the first SSB from the plurality of SSBs at the second time, where the second time is within the running period of the first timer.

Optionally, the first message includes duration of a first timer.

The processing module 802 is further configured to start the first timer when sending the first SDT data; and after the first timer expires, the terminal device selects a fourth SSB from the plurality of SSBs at the second time.

The sending module 803 is further configured to send the second SDT data to the network device by using a CG resource corresponding to the fourth SSB, where the second time is after expiration time of the first timer.

Optionally, the first message further includes N CG-SDT configurations and N control resource sets and/or N search spaces, one CG-SDT configuration corresponds to one control resource set and/or one search space, and the CG-SDT configuration indicates a CG-SDT resource set, where N is an integer greater than or equal to 1.

Optionally, the receiving module 801 is further configured to receive downlink control information from the network device by using a control resource set corresponding to the first SSB and/or a search space corresponding to the first SSB, and the downlink control information indicates an uplink resource or a downlink resource.

The sending module 803 is further configured to send third SDT data to the network device by using the uplink resource.

Alternatively, the receiving module 801 is further configured to receive the third SDT data from the network device by using the downlink resource.

Optionally, the sending module 803 is further configured to send configured grant CG-uplink control information UCI to the network device by using the second CG resource corresponding to the first SSB, and the CG-UCI indicates a first SSB index.

Optionally, the sending module 803 is further configured to send CG-UCI and a demodulation reference signal DMRS to the network device by using the second CG resource corresponding to the first SSB. The CG-UCI indicates a part of a first SSB index, and the DMRS indicates the other part of the first SSB index.

Optionally, the CG-UCI further indicates at least one of a hybrid automatic repeat request identifier HARQ ID, a redundancy version, and a new transmission indication.

It should be noted that, for implementation of the modules, refer to corresponding descriptions of the method embodiments shown in FIG. 3, FIG. 4, FIG. 6, and FIG. 7, to perform methods and functions performed by the terminal device in the foregoing embodiments.

FIG. 9 is a schematic diagram of a structure of a data transmission apparatus according to an embodiment of this application. The data transmission apparatus may include a receiving module 901 and a sending module 902. The receiving module 901 and the sending module 902 may communicate with the outside. The receiving module 901 and the sending module 902 may also be referred to as a communication interface, a transceiver module, or a transceiver unit. The receiving module 901 and the sending module 902 may be configured to perform actions performed by the network device in the foregoing method embodiments.

For example, the receiving module 901 and the sending module 902 may also be referred to as a transceiver module or a transceiver unit (including a sending unit and/or a receiving unit), and are respectively configured to perform sending and receiving steps of the network device in the foregoing method embodiments.

In a possible design, the data transmission apparatus may implement corresponding steps or procedures performed by the network device in the foregoing method embodiments, for example, may be a network device, or a chip or a circuit disposed in the network device. The receiving module 901 and the sending module 902 are configured to perform receiving-related and sending-related operations on a network device side in the foregoing method embodiments.

The receiving module 901 is configured to receive first small data transmission SDT data that is sent by a terminal device in a radio resource control RRC inactive state by using a first configured grant CG resource corresponding to a first SSB.

The receiving module 901 is further configured to receive second SDT data that is sent by the terminal device by using a second CG resource corresponding to the first SSB.

Optionally, the sending module 902 is configured to send a first message to the terminal device, and the first message indicates to enter the RRC inactive state.

Optionally, the first message includes duration of a first timer, and the duration of the first timer indicates time for selecting the first SSB.

Optionally, the first message further includes N CG-SDT configurations and N control resource sets and/or N search spaces, one CG-SDT configuration corresponds to one control resource set and/or one search space, and the CG-SDT configuration indicates a CG-SDT resource set, where N is an integer greater than or equal to 1.

Optionally, the sending module 902 is further configured to send downlink control information to the terminal device by using a control resource set corresponding to the first SSB and/or a search space corresponding to the first SSB, and the downlink control information indicates an uplink resource or a downlink resource.

The receiving module 901 is further configured to receive, on the uplink resource, third SDT data sent by the terminal device.

Alternatively, the sending module 902 is further configured to send the third SDT data to the terminal device on the downlink resource.

Optionally, the receiving module 901 is further configured to receive CG-UCI that is sent by the terminal device by using the second CG resource corresponding to the first SSB, and the CG-UCI indicates a first SSB index.

Optionally, the receiving module 901 is further configured to receive CG-UCI and a DMRS that are sent by the terminal device by using the second CG resource corresponding to the first SSB. The CG-UCI indicates a part of a first SSB index, and the DMRS indicates the other part of the first SSB index.

Optionally, the CG-UCI further indicates at least one of a hybrid automatic repeat request identifier HARQ ID, a redundancy version, and a new transmission indication.

It should be noted that, for implementation of the modules, refer to corresponding descriptions of the method embodiments shown in FIG. 3, FIG. 4, FIG. 6, and FIG. 7, to perform methods and functions performed by the network device in the foregoing embodiments.

FIG. 10 is a schematic diagram of a structure of a terminal device according to an embodiment of this application. The terminal device may be used in the systems shown in FIG. 1(A) and FIG. 1(B), to perform functions of the terminal device in the foregoing method embodiments, or implement steps or procedures performed by the terminal device in the foregoing method embodiments.

As shown in FIG. 10, the terminal device includes a processor 1001 and a transceiver 1002. Optionally, the terminal device further includes a memory 1003. The processor 1001, the transceiver 1002, and the memory 1003 may communicate with each other through an internal connection path, to transfer a control signal and/or a data signal. The memory 1003 is configured to store a computer program. The processor 1001 is configured to invoke the computer program from the memory 1003 and run the computer program, to control the transceiver 1002 to receive and send a signal. Optionally, the terminal device may further include an antenna, configured to send, by using a radio signal, uplink data or uplink control signaling output by the transceiver 1002.

The processor 1001 and the memory 1003 may be integrated into one processing apparatus. The processor 1001 is configured to execute program code stored in the memory 1003 to implement the foregoing functions. During specific implementation, the memory 1003 may alternatively be integrated into the processor 1001, or may be independent of the processor 1001. The processor 1001 may correspond to the processing module in FIG. 8.

The transceiver 1002 may correspond to the receiving module and the sending module in FIG. 8, and may also be referred to as a transceiver unit or a transceiver module. The transceiver 1002 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device shown in FIG. 10 can implement processes related to the terminal device in the method embodiments shown in FIG. 3, FIG. 4, FIG. 6, and FIG. 7. Operations and/or functions of the modules in the terminal device are separately used to implement the corresponding procedures in the foregoing method embodiments. For details, refer to the descriptions in the foregoing method embodiments. To avoid repetition, detailed descriptions are properly omitted herein.

The processor 1001 may be configured to perform an action that is implemented inside the terminal device and that is described in the foregoing method embodiments. The transceiver 1002 may be configured to perform an action that is of sending to the network device or receiving from the network device by the terminal device and that is described in the foregoing method embodiments. For details, refer to the descriptions in the foregoing method embodiments. Details are not described herein again.

The processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 1001 may be a combination of processors implementing a computing function, for example, a combination of one or more microprocessors, or a combination of the digital signal processor and a microprocessor. A communication bus 1004 may be a peripheral component interconnect standard PCI bus, an extended industry standard architecture EISA bus, or the like. The bus may be classified into an address bus, a data bus, a control bus, and the like. For ease of representation, only one bold line is used to represent the bus in FIG. 10, but this does not mean that there is only one bus or only one type of bus. The communication bus 1004 is configured to implement connection and communication between these components. The transceiver 1002 in this embodiment of this application is configured to perform signaling or data communication with another node device. The memory 1003 may include a volatile memory, for example, a nonvolatile dynamic random access memory (nonvolatile random access memory, NVRAM), a phase change random access memory (phase change RAM, PRAM), or a magnetoresistive random access memory (magnetoresistive RAM, MRAM). The memory 1003 may further include a nonvolatile memory, for example, at least one magnetic disk storage device, an electrically erasable programmable read-only memory (electrically erasable programmable read-only memory, EEPROM), a flash storage device, for example, a NOR flash memory (NOR flash memory) or a NAND flash memory (NAND flash memory), or a semiconductor device, for example, a solid-state drive (solid-state drive, SSD). Optionally, the memory 1003 may alternatively be at least one storage apparatus located far away from the processor 1001. Optionally, the memory 1003 may further store a group of computer program code or configuration information. Optionally, the processor 1001 may further execute a program stored in the memory 1003. The processor may cooperate with the memory and the transceiver to perform any method and function of the terminal device in the foregoing embodiments of this application.

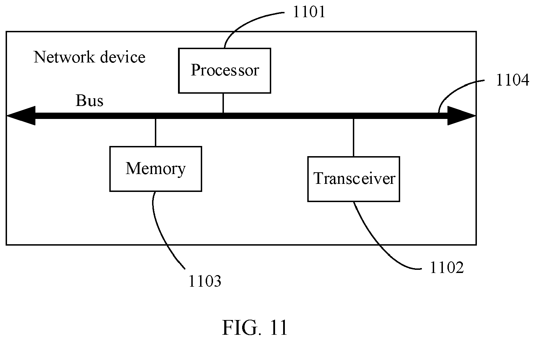

FIG. 11 is a schematic diagram of a structure of a network device according to an embodiment of this application. The network device may be used in the systems shown in FIG. 1(A) and FIG. 1(B), to perform functions of the network device in the foregoing method embodiments, or implement steps or procedures performed by the network device in the foregoing method embodiments.

As shown in FIG. 11, the network device includes a processor 1101 and a transceiver 1102. Optionally, the network device further includes a memory 1103. The processor 1101, the transceiver 1102, and the memory 1103 may communicate with each other through an internal connection path to transfer a control signal and/or a data signal. The memory 1103 is configured to store a computer program. The processor 1101 is configured to invoke the computer program from the memory 1103 and run the computer program, to control the transceiver 1102 to receive/send a signal. Optionally, the network device may further include an antenna, configured to send, by using a radio signal, uplink data or uplink control signaling output by the transceiver 1102.

The processor 1101 and the memory 1103 may be integrated into one processing apparatus. The processor 1101 is configured to execute program code stored in the memory 1103 to implement the foregoing functions. During specific implementation, the memory 1103 may alternatively be integrated into the processor 1101, or may be independent of the processor 1101.

The transceiver 1102 may correspond to the receiving module and the sending module in FIG. 9, and may also be referred to as a transceiver unit or a transceiver module. The transceiver 1102 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the network device shown in FIG. 11 can implement processes related to the network device in the method embodiments shown in FIG. 3, FIG. 4, FIG. 6, and FIG. 7. Operations and/or functions of the modules in the network device are separately used to implement corresponding procedures in the foregoing method embodiments. For details, refer to the descriptions in the foregoing method embodiments. To avoid repetition, detailed descriptions are properly omitted herein.

The processor 1101 may be configured to perform an action that is implemented inside the network device and that is described in the foregoing method embodiments. The transceiver 1102 may be configured to perform an action that is of sending to the terminal device or receiving from the terminal device by the network device and that is described in the foregoing method embodiments. For details, refer to the descriptions in the foregoing method embodiments. Details are not described herein again.

The processor 1101 may be processors of various types mentioned above. A communication bus 1104 may be a peripheral component interconnect standard PCI bus, an extended industry standard architecture EISA bus, or the like. The bus may be classified into an address bus, a data bus, a control bus, and the like. For ease of representation, only one bold line is used to represent the bus in FIG. 11, but this does not mean that there is only one bus or only one type of bus. The communication bus 1104 is configured to implement connection and communication between these components. The transceiver 1102 of the device in this embodiment of this application is configured to perform signaling or data communication with another device. The memory 1103 may be any type of memory mentioned above. Optionally, the memory 1103 may be at least one storage apparatus located far away from the processor 1101. The memory 1103 stores a group of computer program code or configuration information, and the processor 1101 executes a program in the memory 1103. The processor may cooperate with the memory and the transceiver to perform any method and function of the network device in the foregoing embodiments of this application.

An embodiment of this application further provides a chip system. The chip system includes a processor, configured to support a terminal device or a network device in implementing a function in any one of the foregoing embodiments, for example, generating or processing SDT data in the foregoing methods. In a possible design, the chip system may further include a memory, and the memory is configured to store program instructions and data that are necessary for the terminal device or the network device. The chip system may include a chip, or may include a chip and another discrete component. An input and an output of the chip system respectively correspond to receiving and sending operations of the terminal device or the network device in the method embodiments.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. Steps of the method disclosed with reference to embodiments of this application may be directly performed and completed by a hardware processor, or may be performed and completed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

According to the methods provided in embodiments of this application, this application further provides a computer program product. The computer program product includes computer program code. When the computer program code is run on a computer, the computer is enabled to perform the method in any one of the embodiments shown in FIG. 3, FIG. 4, FIG. 6, and FIG. 7.

According to the methods provided in embodiments of this application, this application further provides a computer-readable medium. The computer-readable medium stores program code. When the program code is run on a computer, the computer is enabled to perform the method in any one of the embodiments shown in FIG. 3, FIG. 4, FIG. 6, and FIG. 7.

According to the methods provided in embodiments of this application, this application further provides a communication system. The communication system includes the foregoing one or more terminal devices and the foregoing one or more network devices.

All or some of the foregoing embodiments may be implemented by using software, hardware, firmware, or any combination thereof. When the software is used to implement the embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), or a semiconductor medium (for example, a solid-state drive (solid state disc, SSD)), or the like.

The network device and the terminal device in the foregoing apparatus embodiments correspond to the network device or the terminal device in the method embodiments. A corresponding module or unit performs a corresponding step. For example, a receiving module and a sending module (transceiver) perform a receiving or sending step in the method embodiments, and a step other than sending and receiving may be performed by a processing module (processor). For a function of a specific module, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be another division manner in actual implementation. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
when a terminal device is in a radio resource control RRC inactive state, selecting, by the terminal device, a first synchronization signal block SSB at first time, and sending first small data transmission SDT data to a network device by using a first configured grant CG resource corresponding to the first SSB; and
when signal quality of a plurality of SSBs at second time is greater than a first threshold, selecting, by the terminal device, the first SSB from the plurality of SSBs at the second time, and sending second SDT data to the network device by using a second CG resource corresponding to the first SSB.

2. The method according to claim 1, wherein the method further comprises:
when signal quality of one or more SSBs at the second time is greater than the first threshold and signal quality of the first SSB is less than or equal to the first threshold, selecting, by the terminal device, a second SSB from the one or more SSBs at the second time, and sending the second SDT data to the network device by using a CG resource corresponding to the second SSB.

3. The method according to claim 1, wherein the preferentially selecting, by the terminal device, the first SSB from the plurality of SSBs at the second time comprises:
when the terminal device fails to receive acknowledgment ACK indication information of the first SDT data or receives negative acknowledgment NACK indication information of the first SDT data, preferentially selecting, by the terminal device, the first SSB from the plurality of SSBs at the second time.

4. The method according to claim 1, wherein the method further comprises:
when the terminal device receives ACK indication information of the first SDT data, selecting, by the terminal device, a third SSB from the plurality of SSBs at the second time, and sending the second SDT data to the network device by using a CG resource corresponding to the third SSB.

5. The method according to any one of claims 1 to 4, wherein the method further comprises:
receiving, by the terminal device, a first message sent by the network device, wherein the first message indicates to enter the RRC inactive state.

6. The method according to claim 5, wherein the first message comprises duration of a first timer, and the preferentially selecting, by the terminal device, the first SSB from the plurality of SSBs at the second time comprises:
starting, by the terminal device, the first timer when sending the first SDT data; and
in a running period of the first timer, preferentially selecting, by the terminal device, the first SSB from the plurality of SSBs at the second time, wherein the second time is within the running period of the first timer.

7. The method according to claim 5, wherein the first message comprises duration of a first timer, and the method further comprises:
starting, by the terminal device, the first timer when sending the first SDT data; and
after the first timer expires, selecting, by the terminal device, a fourth SSB from the plurality of SSBs at the second time, and sending the second SDT data to the network device by using a CG resource corresponding to the fourth SSB, wherein the second time is after expiration time of the first timer.

8. The method according to any one of claims 5 to 7, wherein the first message further comprises N CG-SDT configurations and N control resource sets and/or N search spaces, one CG-SDT configuration corresponds to one control resource set and/or one search space, and the CG-SDT configuration indicates a CG-SDT resource set, wherein N is an integer greater than or equal to 1.

9. The method according to claim 8, wherein the method further comprises:
receiving, by the terminal device, downlink control information from the network device by using a control resource set corresponding to the first SSB and/or a search space corresponding to the first SSB, wherein the downlink control information indicates an uplink resource or a downlink resource; and
sending, by the terminal device, third SDT data to the network device by using the uplink resource, or receiving the third SDT data from the network device by using the downlink resource.

10. The method according to any one of claims 1 to 9, wherein the method further comprises:
sending, by the terminal device, configured grant CG-uplink control information UCI to the network device by using the second CG resource corresponding to the first SSB, wherein the CG-UCI indicates a first SSB index.

11. The method according to any one of claims 1 to 9, wherein the method further comprises:
sending, by the terminal device, CG-UCI and a demodulation reference signal DMRS to the network device by using the second CG resource corresponding to the first SSB, wherein the CG-UCI indicates a part of a first SSB index, and the DMRS indicates the other part of the first SSB index.

12. The method according to claim 10 or 11, wherein the CG-UCI further indicates at least one of a hybrid automatic repeat request identifier HARQ ID, a redundancy version, and a new transmission indication.

13. A data transmission method, comprising:
receiving, by a network device, first small data transmission SDT data that is sent by a terminal device in a radio resource control RRC inactive state by using a first configured grant CG resource corresponding to a first SSB; and
receiving, by the network device, second SDT data that is sent by the terminal device by using a second CG resource corresponding to the first SSB.

14. The method according to claim 13, wherein the method further comprises:
sending, by the network device, a first message to the terminal device, wherein the first message indicates to enter the RRC inactive state.

15. The method according to claim 14, wherein the first message comprises duration of a first timer, and the duration of the first timer indicates time for selecting the first SSB.

16. The method according to claim 14 or 15, wherein the first message further comprises N CG-SDT configurations and N control resource sets and/or N search spaces, one CG-SDT configuration corresponds to one control resource set and/or one search space, and the CG-SDT configuration indicates a CG-SDT resource set, wherein N is an integer greater than or equal to 1.

17. The method according to claim 16, wherein the method further comprises:
sending, by the network device, downlink control information to the terminal device by using a control resource set corresponding to the first SSB and/or a search space corresponding to the first SSB, wherein the downlink control information indicates an uplink resource or a downlink resource; and
receiving, by the network device on the uplink resource, third SDT data sent by the terminal device, or sending the third SDT data to the terminal device on the downlink resource.

18. The method according to any one of claims 13 to 17, wherein the method further comprises:
receiving, by the network device, CG-UCI that is sent by the terminal device by using the second CG resource corresponding to the first SSB, wherein the CG-UCI indicates a first SSB index.

19. The method according to any one of claims 13 to 17, wherein the method further comprises:
receiving, by the network device, CG-UCI and a DMRS that are sent by the terminal device by using the second CG resource corresponding to the first SSB, wherein the CG-UCI indicates a part of a first SSB index, and the DMRS indicates the other part of the first SSB index.

20. The method according to claim 18 or 19, wherein the CG-UCI further indicates at least one of a hybrid automatic repeat request identifier HARQ ID, a redundancy version, and a new transmission indication.

21. A data transmission apparatus, comprising a processor and a memory, wherein the memory is configured to store a computer program, and the processor runs the computer program, to enable the apparatus to perform the method according to any one of claims 1 to 12 or claims 13 to 20.

22. A chip, wherein the chip is a chip in a terminal device or a network device, the chip comprises a processor and an input interface and an output interface that are connected to the processor, the chip further comprises a memory, and when a computer program in the memory is executed, the method according to any one of claims 1 to 12 or claims 13 to 20 is performed.

23. A computer-readable storage medium, configured to store a computer program, wherein when the computer program runs on a computer, the computer is enabled to perform the method according to any one of claims 1 to 12 or claims 13 to 20.

24. A computer program product, wherein the computer program product comprises a computer program, and when the computer program runs on a computer, the computer is enabled to perform the method according to any one of claims 1 to 12 or any one of claims 13 to 20.

25. A communication system, wherein the system comprises a terminal device and a network device, the terminal device performs the method according to any one of claims 1 to 12, and the network device performs the method according to any one of claims 13 to 20.
